# EUROPEAN PATENT APPLICATION

(11) **EP 0 773 365 A2**
(43) Date of publication of application: **14.05.1997**
(21) Application number: 96114243.7
(22) Date of filing: 05.09.1996
(51) Int. Cl.: F04B 17/04

(54) **Electromagnetic pump**

(30) Priority: 13.10.1995 JP 265637/95; 31.10.1995 JP 283897/95
(71) Applicant: YAMAHA HATSUDOKI KABUSHIKI KAISHA, Iwata-shi Shizuoka-ken, 438 (JP)
(72) Inventor: Yamada, Seiichiro, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

An electromagnetic pump comprises at least two fluid passages both opening into a pump chamber and being openable and closable, respectively, by respective valves. Further, a plunger reciprocately movable inside said pump chamber and a solenoid for driving said plunger are provided, whereby at least one of said valves being coaxially positioned with said plunger with respect to the direction of reciprocating movement of said plunger.

## Description

The present invention relates to an electromagnetic pump comprising at least two fluid passages both opening into a pump chamber and being openable and closable, respectively, by respective valves, a plunger reciprocately movable inside said pump chamber and a solenoid for driving said plunger.

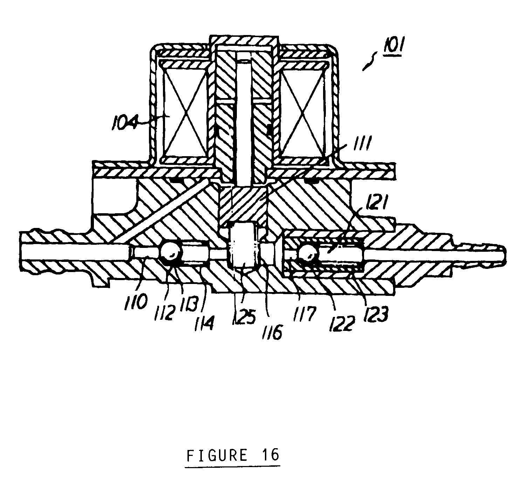

Electromagnetic pumps are used, for example, in two cycle engines to supply the required amount of lubricating oil. This sort of conventional electromagnetic pump is shown in Figure 16.

To wit, Figure 16 is a sectional view of the principal parts of a conventional electromagnetic pump 101; said electromagnetic pump consists of an oil intake passage 110 and an pump outlet passage 117 which open into the pump chamber 125, of said electromagnetic pump 101. Inside the pump chamber 125 the oil intake passage 110 and the pump outlet passage 117 are opened and closed by a one-way valve 112 on the intake side, and one-way valve 121 on the pump outlet side, respectively.

The one-way valve 112 on the intake side is composed of a ball 113 and a spring 114 that exerts force against it; this structure permits the flow of oil toward the pump chamber 125 from the oil intake side. Also, the one-way valve 121 on the pump outlet side is composed of a ball 122 and a spring 123 that exerts a force against it; this structure permits the flow of oil from the pump chamber 125 toward the pump outlet passage 117.

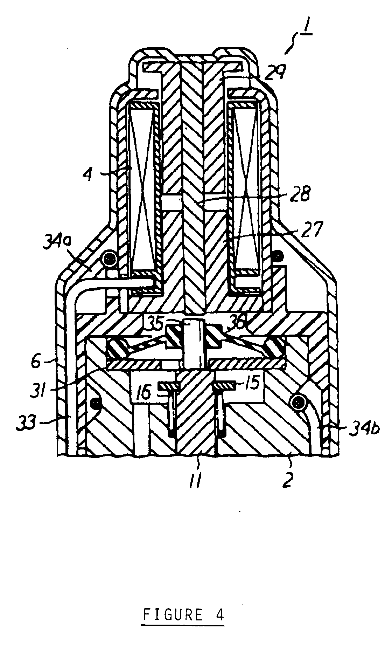

Bordering this pump chamber 125, as is shown in Figure 4, is a plunger 111, which moves reciprocatingly up and down to perform the pumping action. Said plunger is pushed upward by a spring 116 contained within the pump chamber 125 and is driven by a solenoid 104.

Thus, when no current is being applied to the solenoid 104, as is shown in the figure, the force of the spring 116 causes the plunger 111 to rise. From this state, when current is then applied to the solenoid 104, the electromagnetic force pushes the plunger 111 down by the amount ΔS, thereby increasing the pressure and compressing the oil volume ΔV inside the oil chamber 125, thereby causing the pressure of said oil to push open the one-way valve 121 on the pump outlet side, whereby an amount of oil ΔV is pumped into the pump outlet passage 125. Next, upon cutting off the current to the solenoid 104, the force of spring 116 pushes the plunger 111 upward to the position shown in the figure. This procedure generates a negative pressure inside the pump chamber 125, and this negative pressure causes the one-way valve 112 on the oil intake side to open, and a volume of oil equal to ΔV to flow into the pump chamber 125 through the oil intake passage 110.

The repetition of the above action causes the up-and-down reciprocating movement of the plunger 11 and causing the intermittent pumping of the prescribed volume of oil ΔV from the electromagnetic pump 101.

However, due to the fact that in the foregoing conventional electromagnetic pumps the increases and decreases in the volume V of the pump chamber 125, ΔV (the amount of oil pumped) accompanying the reciprocating movement of the plunger 111 is defined by the compression ratio ΔV/V, and because this ratio is so small, there are times that the functional stability of the one-way valves 112, 121 can be impaired. In particular, when air invades the pump chamber 125, significant negative pressures or positive pressures cannot be generated in the pump chamber 125, and air lock, which causes the one-way valves 112, 121 to malfunction, then will be likely.

Further, because the absolute volume ΔV of the amount of oil being pumped is comparatively large, it is impossible to control, with high accuracy, the amount of oil supply based upon the operating condition of the engine. This feature can result in too much oil being supplied to the engine, thereby resulting in the generation of white smoke and the uneconomical increase in the amount of oil consumed.

Accordingly, it is an objective of the present invention to provide an improved electromagnetic pump as indicated above which always assures with simple technical means a stable supply of fluid and simultaneously is compact and inexpensive.

According to the invention, this objective is solved for an electromagnetic pump as indicated above in that at least one of said valves being coaxially positioned with said plunger with respect to the direction of reciprocating movement of said plunger.

According to an advantageous embodiment of the present invention, said electromagnetic pump comprises a pump chamber having a dead space of 0.1 cm³ or less and having an output of pumped fluid within a range from 0.001 cm³/pump cycle to 0.05 cm³/pump cycle.

According to another embodiment of the invention, an electromagnetic pump has a structure being such that when the foregoing solenoid is OFF, the foregoing plunger is in contact with and closes off the foregoing coaxially disposed valve, for example, a one-way valve.

Further, it is advantageous when the operation of the solenoid is detectable by means of an electrical ON-OFF signal or by piezostatic electricity produced by a piezoelectric element and generated by the separation of the foregoing plunger from another electrically conductive member.

Another embodiment for an electromagnet pump is characterized by the foregoing plunger and the ball that constitutes the foregoing valve, being positioned adjacently inside the pump chamber.

Still further, it is possible that an electromagnetic pump operates such that the ON time for the foregoing solenoid is set to be 10 ms or more.

A further embodiment of the invention is characterized in that the stroke of the foregoing plunger and the OFF time for the foregoing solenoid is variable.

Thus, according to the invention the amount of dead space V' (=the volume V of the pump chamber minus the amount of fluid pumped ΔV) has been minimized (0.1 cc or less), making it possible to increase the compression ratio of the fluid in the pump chamber, to prevent the occurrence of air lock and to improve the stability of the one-way valve operations. Further, because the single cycle of pumped fluid output ΔV is small (0.001 to 0.05 cc/pump cycle), it is possible to reliably supply small quantities of fluid.

Also, according to an embodiment of the invention, because the ON time for the solenoid has been set to be 10 ms or more, fluid is drawn into the pump chamber only after the air has been completely expelled from the pump chamber, thereby achieving high negative pressure in the pump chamber to reliably prevent air lock, and to improve the functional stability of the electromagnetic pump.

Furthermore, according to another embodiment of the invention, because the stroke of the plunger and the OFF time of the solenoid in the electromagnetic pump are variable, it is possible to vary the stroke of the electromagnetic pump and expand commensurately the control range for the output for the electromagnetic pump, thereby expanding the dynamic range using a simple structure.

An electromagnetic pump according to another embodiment of the invention is characterized by comprising a plurality of sub-assemblies, each consisting of the foregoing pump chamber, the two oil passages that open into said chamber that are opened and closed by respective one-way valves and the plunger, and driving the plurality of plungers with a single solenoid.

In that case, it is advantageous when the plurality of plungers being positioned equi-angularly along the circumference of a single circle and pointing in the same direction.

Accordingly, because of the position of the at least one of the one-way valves and the plunger coaxially with the direction of movement of that plunger, it is possible to minimize the volume of the pump chamber and to increase the compression ratio of the fluid, thereby preventing air locks and enhancing the stability of the operation of the one-way valves. Further, obtaining an assured supply of small amounts of fluid is possible due to the pump volume for each cycle being held to a minimum.

Because one of the one-way valves is forcefully closable by the plunger when current is not being applied to the solenoid, it is possible to prevent an excess beyond the controlled volume of fluid from flowing into the pump chamber, thereby resolving any problems in fluid output.

Further, the operation of the solenoid is confirmable by means of an electrical ON-OFF signal or by the amount of piezostatic electricity, said electromagnetic pump is highly fail-safe.

In addition, it is possible that a single solenoid is used to simultaneously drive a plurality of plungers, it is possible to supply small amounts of fluid simultaneously to a plurality of targets, using said compact, inexpensive electromagnetic pump.

Moreover, when a plurality of plungers is arrayed equi-anglualrly upon the same circumference and pointing in the same direction, it is possible to smoothly drive the plurality of plungers using a single solenoid.

Other preferred embodiments of the present invention are laid down in further dependent claims.

In the following, the present invention is explained in greater detail with respect to several embodiments thereof in conjunction with the accompanying drawings, wherein:
**Figure 1** is a vertical sectional view of a first embodiment of an electromagnetic pump according to this invention;
**Figure 2** is a bottom view of a first embodiment of an electromagnetic pump according to this invention;
**Figure 3** is a block diagram showing the structure of the control system of a two cycle engine that includes electromagnetic pumps according to this invention;
**Figure 4** is a vertical sectional view of a second embodiment of the top of an electromagnetic pump according to this invention;
**Figure 5** is a vertical sectional view of a third embodiment of an electromagnetic pump according to this invention;
**Figure 6** is a vertical sectional view of a fourth embodiment of the bottom of an electromagnetic pump according to this invention;
**Figure 7** is a bottom view of a fourth embodiment of an electromagnetic pump according to this invention;
**Figure 8** is a vertical sectional view of a fifth embodiment of an electromagnetic pump according to this invention;
**Figure 9** is a sectional view along line A-A of Figure 8;
**Figure 10** is a vertical sectional view of a sixth embodiment of an electromagnetic pump according to this invention;
**Figure 11** is a sectional view along line B-B of Figure 10;
**Figure 12** is a vertical sectional view of a seventh embodiment of an electromagnetic pump according to this invention;
**Figure 13** is a sectional view along line C-C of Figure 12;
**Figure 14** is a vertical section of an electromagnetic pump according to this invention;
**Figure 15** is a timing chart used to explain the operation of the electromagnetic pump according to this invention;
**Figure 16** is a sectional view of thhe principal parts of a conventional electromagnetic pump.

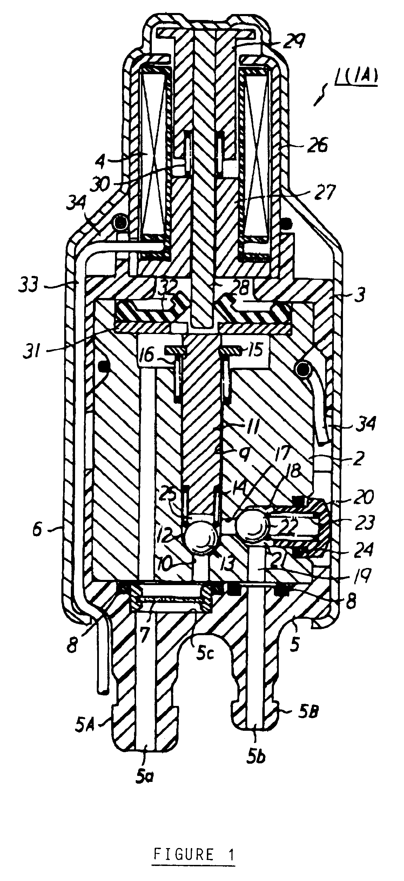

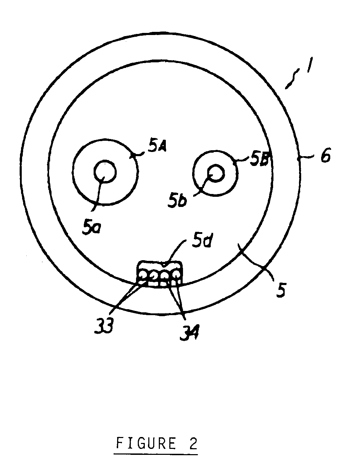

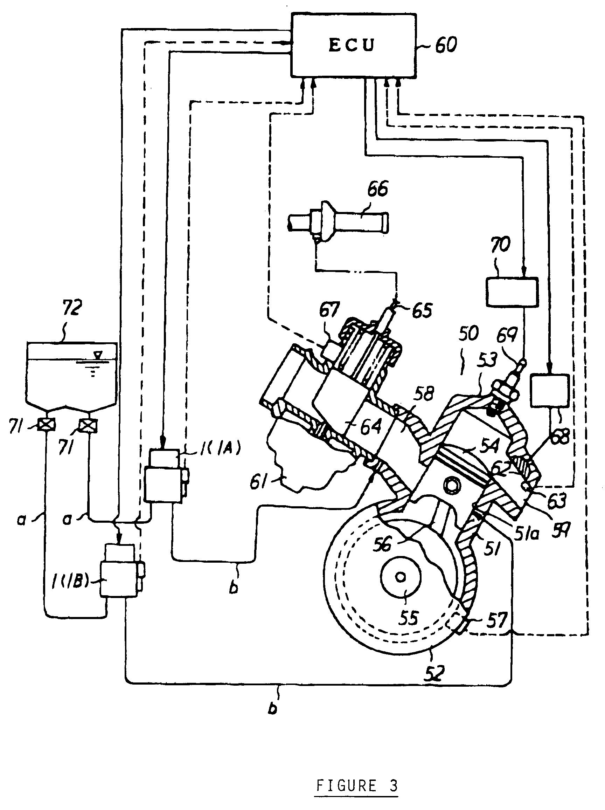

Figure 1 shows a vertical sectional view of a first embodiment of an electromagnetic pump according to this invention; Figure 2 is a bottom view of the same electromagnetic pump; and Figure 3 is a block diagram showing the control system for a two-cycle engine that includes the same electromagnetic pump.

First, the general structure of the control system of a two cycle engine 50 will be described with reference to Figure 3.

With regard to the two-cycle engine 50 shown in Figure 3, 51 represents the cylinder body, 52 the crankcase, and 53 the cylinder head. There is a piston 54 that is slidably inserted into the cylinder 51a formed in the cylinder body 51, and said piston 54 is connected by a connecting rod 56 to the crankshaft 55 which is rotatably housed inside the crankcase 52. There is a rotation sensor 57 mounted to the side of the crankcase 52 that detects the number of engine rotations, and the engine RPM that is detected by said rotation sensor 57 is fed into an engine control unit 60 (abbreviated "ECU" below).

In addition, an air intake passage 58 and an exhaust passage 59 are formed in the cylinder body 51. A carburetor 61 is connected with the air intake passage 58, while a rotary-type variable exhaust timing valve 62 and a valve aperture sensor 63 sensing the aperture of said rotary type variable exhaust timing valve 62 are connected amid the exhaust passage 59.

There is a piston type throttle valve 64 mounted in the foregoing carburetor 61, and said throttle valve 64 is connected by means of a throttle wire 65 to a throttle lever 66 mounted on the handlebars of a motorcycle or the like. There is also a throttle sensor 67 that is mounted in the carburetor 61 that detects the aperture of the throttle valve 64. The throttle aperture that is detected by said throttle sensor 67 is fed into the foregoing ECU 60.

The foregoing rotary type variable exhaust timing valve 62 is driven by a servomotor 68; a control signal output by the ECU 60 controls the drive by said servomotor 68. Also, the aperture of the rotary type variable exhaust timing valve 62 that is detected by the foregoing valve aperture sensor 63 is fed into the ECU 60.

A spark plug 69 has been screwed into the top of the cylinder head 53, and said spark plug 69 is driven by an ignition coil 70 that is controlled by control signals from the ECU 60.

In the present embodiment, there are two electromagnetic pumps 1 (1A, 1B). Each of the pumps 1 (1A, 1B) has an intake line *a* on the intake side that connect through filters 71 to an oil tank 72. The outlet line *b* of the one electromagnetic pump A supplies oil to the air intake passage 58 of the two-cycle engine 50, while the outlet line *b* of the other electromagnetic pump B supplies oil to the sliding surface between the cylinder 51a and the piston 54 of the two cycle engine 50.

At this point, the structure of the foregoing electromagnetic pump 1 (1A) will be described in detail based upon Figures 1 and 2. The structure of the other electromagnetic pump 1B is identical to that of electromagnetic pump 1A, so that explanation of it will be omitted.

As is shown in Figure 1, the electromagnetic pump 1 in the present embodiment positions the solenoid 4 by means of an insulating member 34 at the top of an aluminum pump body 2, and a cap 5 is affixed to the lower half of the body 2; the entirety is fully covered by a sheet metal cover 6 to comprise a tightly closed structure.

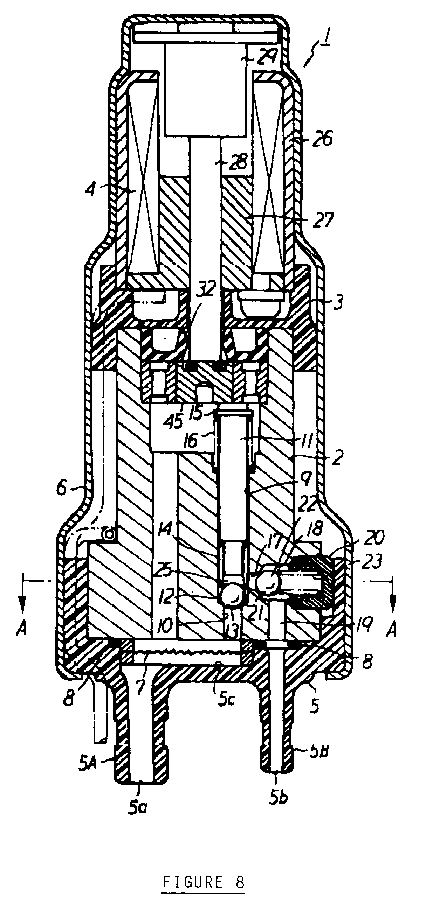

Integral to and projecting downward from the foregoing cap 5 are an intake stub 5A and an outlet stub 5B. There is a groove 5c formed on the contact surfaces between said cap 5 and the body 2 and a filter 7 is fitted into said groove. Passing through the intake stub 5A and outlet stub 5b are respective oil intake passage 5a and pump outlet passage 5b. As shown in Figure 3, the intake line *a* and the pump outlet line *b* are connected respectively to the oil intake passage 5a and the pump outlet passage 5b. In Figure 1, 8 is a seal ring.

Formed in the middle of the foregoing body 2 are a large diameter hole 9 and a small diameter oil intake passage 20. The oil intake passage 10 opens into the foregoing groove area 5c that is formed in the cap; the plunger 11 is inserted into the hole 9 to be freely slidable up and down. There is a one-way valve 12 on the intake side, composed of a ball 13 and spring 14, that opens and closes the oil intake passage 10. With regard to the one-way valve 12 on the intake side, the spring 14 exerts a force against the ball 13 in a direction that causes it to close the oil intake passage 10, and pressing the plunger 11 upward. The plunger 11 is also pushed upward by a spring 16 that lies compressed between the spring holder 15 fitted on the top outer circumference of the plunger 11 and the body 2. The diameter of the ball 13 is designed to be slightly smaller or to be approximately equivalent to the diameter of the plunger 11.

Moreover, the small diameter pump outlet passage 17 and the large diameter round hole 18 in the body 2 are formed (horizontally) to intersect the foregoing round hole 9 and the oil intake passage 10 at right angles, with the pump outlet passage 17 being connected to the round hole 9. In addition, an pump outlet passage 19 is formed in the vertical direction in the body 2 (parallel to the oil intake passage 10). One end of said pump outlet passage 19 opens into the round hole 18, while the other end connects to the foregoing pump outlet passage 5b.

One end of the foregoing round hole 18 is closed by the cap 20, and the output side one-way valve 21 composed of a ball 22 and a spring 23 is housed inside said round hole 18. The spring 23 exerts a force on the ball 22 of the outlet side one-way valve 22 to push it in the closed direction. In Figure 1, 24 represents a seal ring.

Thus, in the current embodiment, the one-way valve 12 on the intake side and the plunger 11 are positioned to be coaxial with the direction of movement of said plunger 11 (in the vertical direction of Figure 1) and the area that is bounded by the balls 13, 22 of the round hole 9 and the pump outlet passage 17, and the plunger 11 constitutes the pump chamber. The balls 13, 22 of both one-way valves are in surface contact or linear contact with the body 2; by using surface contact, any dimensional deviations can be absorbed, and by using linear contact, it is possible to obtain a very tight seal in the one-way valves 12, 21.

The foregoing solenoid 4 is enclosed inside the case 26, and a metal guide member 37 is fitted around its lower inside circumference. A rod 28, free to slide up and down, is inserted through the center of said guide member 27. The force from a spring 30 compressed between the spring holder 29 fitted to the top of this rod 28 and the guide member 27, pushes the rod 28 upward.

Fitted into a groove formed in the top end surface of the foregoing body 2 are a ring-shaped stop 31 and a rubber oil seal 32; the inside circumference of the oil seal 32 is in resilient contact with the outside circumference of the foregoing rod 28.

Also, as is shown in Figure 2, there is a notched cut 5d in the foregoing cap 5, and four lead wires 33, 34 leading from the foregoing ECU 60 (see Figure 3) pass through this notch 5d to the inside of the electromagnetic pump 1. Two of the leads 33 are connected to the solenoid 4 and the remaining leads 34 are connected to the foregoing rod 28 and plunger 11, respectively.

Next, the operation of this electromagnetic pump 1 will be explained.

When no current is being applied to the solenoid (when it is OFF), as is shown in Figure 1, the rod 28 is pushed upward by the force of the spring 30, causing it to come to rest against the cover 6. At this time, said rod 28 is separated from the plunger 11 in a manner such that a prescribed gap is formed between them. Accordingly, the plunger 11 is also held upward by the force of springs 14, 16 and its top surface is in contact with the foregoing stop 31. At this time, the plunger 11 is separated from the ball 13 inside the pump chamber 25 by a distance of ΔS.

Next, when current is passed through the lead wire 33 to the solenoid 4 to turn it ON, the electromagnetic force generated in said solenoid 4 causes the rod 28 to overcome the force of the spring 30 and to descend to contact the plunger 11. Said plunger 11 is pressed downward until its bottom surface comes into contact with, and is stopped by the ball 13. When this happens, oil inside the pump chamber 25 is compressed by the volume ΔV (= the surface area A of the bottom end surface of the plunger 11 times the stroke ΔS), and, due to the resulting increased oil pressure, the pressure overcomes the force of the spring 23 to push the ball 22 "open" in the outlet side one-way valve 21, resulting in a volume of oil equal to ΔV being pushed from the pump chamber 25 to the pump outlet passage 19. As is shown in Figure 3, the oil passes through the outlet line *b* and is supplied to the air intake passage 58 of the two-cycle engine to become intermixed with the air/fuel mixture flowing therein.

Thereupon, when the current to the solenoid 4 is cut (OFF), the electromagnetic force disappears, allowing the force from the spring 30 to return the rod 28 upward to the position that is shown in Figure 1. The spring force generated by the springs 14, 16 also push the plunger 11 upward until it comes to rest against the stop 31. In this procedure, a negative pressure is generated inside the pump chamber 25, and this negative pressure causes the force that is exerted by the spring 14 on the ball 13 in the one-way valve 12 on the intake side to be overcome and the valve opened. As shown in Figure 3, an amount of oil equal to ΔV then flows from the oil tank 72 through the oil supply line *a* (see Figure 3), the oil intake passage 5a, the filter 7 and the oil intake passage 10 to the pump chamber 25.

Next, the above described operation is repeated to cause the plunger 11 to reciprocate up and down, thereby causing the intermittent pumping of specific volumes ΔV by the electromagnetic pump 1.

As described above, because this embodiment employed the above described structure wherein the one-way valve 12 on the intake side and the plunger 11 are positioned coaxially with the direction of movement (vertical in Figure 1) of said plunger 11, it is possible to use a simple structure, to minimize the volume V of the pump chamber and to increase the oil compression ratio ΔV/V. As a result, the possibility of air lock is prevented, thereby enhancing the stable operation of both one-way valves 12, 21.

Further, because the amount of oil ΔV output during each cycle (one reciprocating movement of the plunger 11) is held to a minimum in this embodiment, it is possible to reliably supply small amounts of oil to the two cycle engine 50, and to control said small amounts with high precision based upon the RPM or load of the engine as detected by the rotation sensor 57 and by the throttle sensor 67 shown in Figure 3 and by other factors such as crankcase pressure, oil temperature, water temperature, stub base temperature, etc. that may affect the operating state of the two-cycle engine 50. Specifically, when the two-cycle engine 50 is operating at low speeds and low loads, the number of cycles per unit time of the plunger 11 can be decreased, resulting in a diminished supply of oil, and when operating under high speeds and high loads, the number of reciprocating cycles of the plunger 11 can be increased to increase the supply of oil. When the engine 50 is being started, the oil supply is held to a minimum.

Furthermore, in the present embodiment, because an electrical ON signal through the two lead wires 34 is fed into the ECU 60 (see Figure 3) when the current is applied to the solenoid 4 and the rod 28 makes contact with the plunger 11, and because an electrical OFF signal is fed into the ECU 60 when the current to the solenoid 4 is cut, when there is no current passing through the two lead wires 34 and when the rod 38 separates from the plunger 11, the solenoid operation can be acertained electrically by checking the ON-OFF signal status, thereby making said electromagnetic pump 1 highly fail-safe.

The foregoing discussion concerns just one of the electromagnetic pumps 1A, but the other electromagnetic pump 1B operates in a similar manner. As is shown in Figure 3, the required amount of oil is supplied through the pump output line *b* to the sliding surfaces of the cylinder 51a and the piston 54.

Next, a second implementation embodiment of the present invention will be explained based on Figure 4. Figure 4 is a vertical section of the top of the electromagnetic pump of this embodiment of the invention. In this figure, elements that are the same as those shown in Figure 1 bear the same reference numbers.

The electromagnetic pump 1 of the present embodiment features a piezoelectric element 35 and a diaphragm seal 36 disposed between the rod 28 and the plunger 11. The piezoelectric element 35 is attached to the top end surface of the plunger 11, and the diaphragm seal 36 seals around its circumference. Then, when no current is applied to the solenoid 4, the rod 28 is separated from the piezoelectric element 35 as is shown in the figure, with a gap of a certain dimension between them. It is also possible, however, to have the rod 28 in contact with the piezoelectric element 35 when no current is applied.

The rod 38 is connected to the lead wire 34a, and the piezoelectric element to lead wire 34b. Just as was the case in the foregoing first embodiment, when the current to the solenoid is repeatedly switched ON-OFF, the plunger 11 moves reciprocatingly up and down to perform the required pumping action. When current is applied to the solenoid 4, the rod 28 applies pressure upon the piezoelectric element 35 which generates piezostatic electricity through lead wire 34a and 34b that are detected by the ECU 60 (see Figure 3) to ascertain the operation of the solenoid 4. This design assures that said electromagnetic pump is highly fail-safe.

Since the other components of the electromagnetic pump in this embodiment are similar to those in the foregoing first embodiment, effects similar to those provided by the first embodiment are also realized in this embodiment.

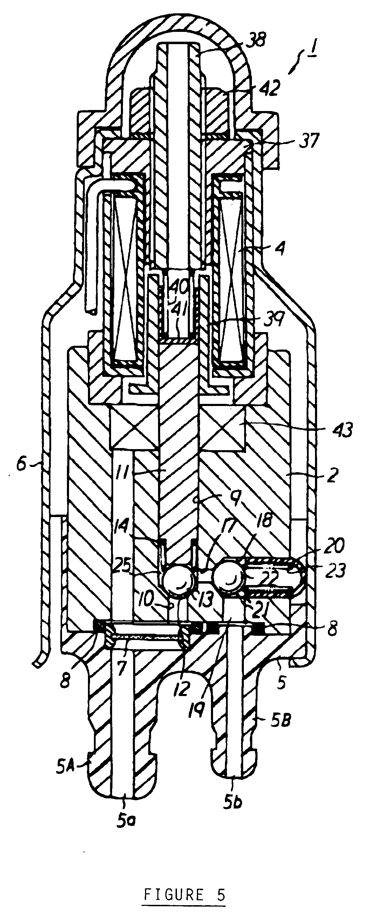

Next, a third embodiment of the present invention will be explained based upon Figure 5. Figure 5 is a vertical sectional view of a third embodiment of the present invention. In the figure, elements that are the same as those in Figure 1 bear the same reference numbers.

The electromagnetic pump 1 of the present embodiment employs a cylindrical metal spring holder 38, which threads into a cap 37 that covers the top of the solenoid 4. A spring 40 disposed between the plunger, which is attached to a metal spring guide 39, and the spring holder, exerts a downward force. This spring 40 is in contact with the plunger 11 by means of an insulating member 41 made of plastic. The electrical conductivity, therefore, between the spring holder 38 and the spring 40 of the plunger 11 is interrupted by means of the insulating member 41. In Figure 5, 42 represents a lock nut and 43 is an oil seal.

Thus, in this embodiment as well, there is a one-way valve 12 on the intake side and a plunger 11 which are coaxial with the direction of the plunger 11 movement (the vertical direction in Figure 5). When no current is applied to the solenoid 4, the plunger 11 is pushed downward by the spring 41, and, as shown in the figure, the one-way valve 12 on the intake side is closed off by the pressure against the ball 13. At this time, there is a gap of a certain size subtended between the spring holder 38 and the spring guide 39.

Accordingly, in the position shown in Figure 5, when current is then applied to the solenoid 4, electromagnetic force causes the plunger 11 and the spring guide 39 to rise due to the force of spring 14 until the spring guide 39 comes into contact with, and stops against the spring holder 38. Thus a negative pressure is generated in the pump chamber 25, and this negative pressure causes the one-way valve 12 on the intake side to open, and to allow an amount of oil equal to ΔV (= the surface area A of the bottom end surface of the plunger 11 times the stroke length ΔS) to flow into the pump chamber 25.

Next, when the current to the solenoid 4 is cut, the plunger 11 and the spring guide 39 descend due to the force of the spring 40, until the two come to rest, as shown in Figure 5, with the plunger 11 in contact with the ball 13. At this time, the oil inside the pump chamber 25 is compressed by the amount of ΔV, and the high oil pressure causes the one-way valve 21 on the pump outlet side to open, resulting in a ΔV volume of oil being expelled from the pump chamber 25 into the pump outlet passage 19.

The repetition of this operation causes the electromagnetic pump 1 to supply intermittent volumes of oil ΔV , and in this embodiment as well, since the one-way valve 12 on the intake side and the plunger 11 are coaxially disposed, effects similar to those delivered by the first embodiment can be obtained. In particular, in the present embodiment, since the ball 12 of the one-way valve 12 on the intake side is pressed with great force by the plunger 11 when no current is being applied to the solenoid 4, any possibility of oil flowing at this time through said one-way valve 12 on the intake side into the pump chamber 25 has been eliminated.

Further, the solenoid operation can be ascertained by the electrical ON-OFF signal that accompanies the breaking of contact between the spring holder 38 and the spring guide 39, thereby assuring highly fail-safe operation of the electromagnetic pump 1.

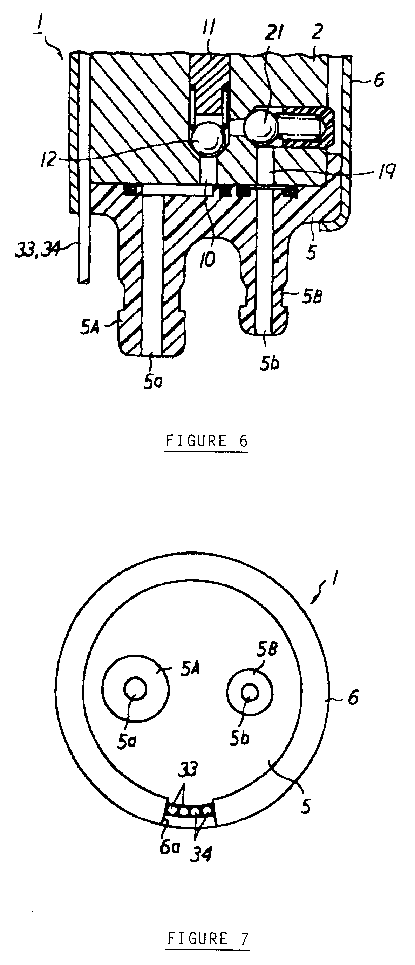

Next, a fourth embodiment of the present invention will be described with reference to Figures 6 and 7. Figure 6 is a vertical sectional view of the bottom of this embodiment of an electromagnetic pump according to this invention; Figure 7 is a bottom view of the same electromagnetic pump; and in these figures, elements that are the same as those shown in Figures 1 and 2 bear the same reference numbers.

The present embodiment of an electromagnetic pump 1 has, as shown in Figure 7, a cut notch 6a has been formed in the bottom end bend area of the cover 6. Four lead wires 33, 34, pass straight through this notch 6a into the electromagnetic pump.

The other structures in the present embodiment are the same as those in the first embodiment. Because the one-way valve 12 on the intake side and the plunger 11 are coaxial, effects similar to those provided by the first embodiment can be obtained.

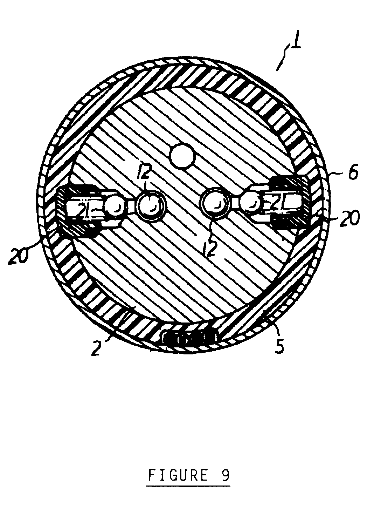

Next, a fifth embodiment of this invention will be explained with reference to Figures 8 and 9. Figure 8 is a vertical sectional view of the fifth embodiment of an electromagnetic pump according to this invention; Figure 9 is a sectional view along line A-A of Figure 8; and elements in the figures that are the same as those shown in Figures 1 and 2 bear the same reference numbers.

The electromagnetic pump 1 in the current embodiment is capable of supplying small quantities of oil to two targets simultaneously using a single pump. It consists of two sets of sub-assemblies consisting of oil passages 10, 17, each with a one-way valve 12, 21 to open and close them that open into the pump chamber 25, and a plunger 11. The two plungers 11 are driven simultaneously by a single solenoid 4. In this case, the two plungers 11 and the two pump output stubs 5B are positioned equi-angularly (180°) on the same circumference apooint in the same direction (the vertical direction). The upper ends of each plungers are in contact through a piston member 45 with the rod 28.

Thus a single solenoid 4 is used to drive two plungers 11 simultaneously to make it possible for the electromagnetic pump of the present embodiment to supply small quantities of oil to two targets simultaneously, wherein the pump is both compact and inexpensively structured.

Because the two plungers are set equi-angularly on the circumference of the same circle and point in the same direction, it is possible to use a single solenoid 4 to smoothly drive two plungers 11 for a stable supply of small amounts of oil to two targets.

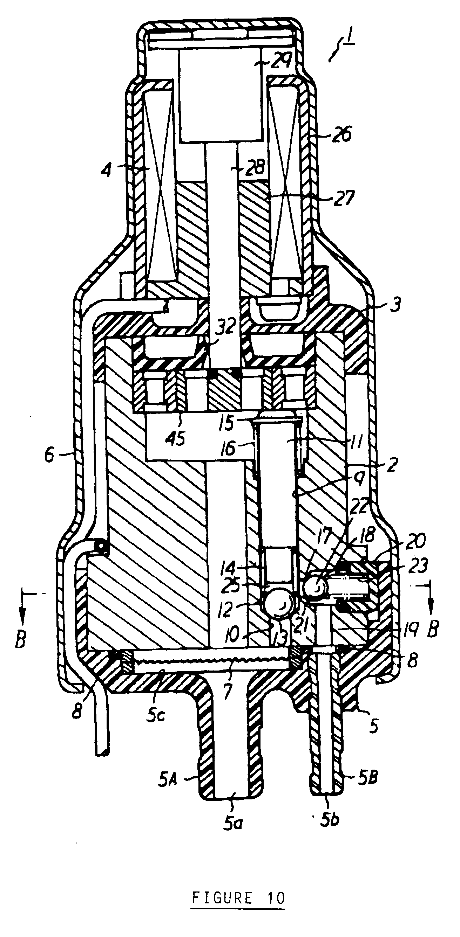

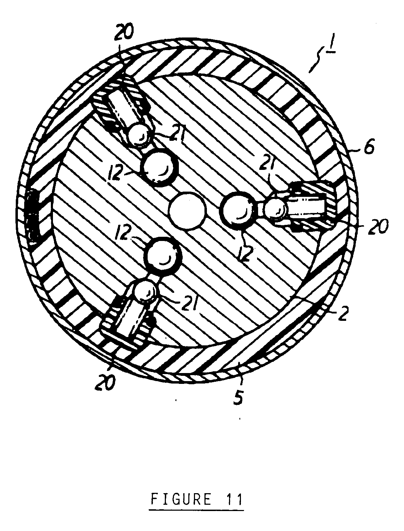

Next, a sixth embodiment of the present invention will be described with reference to Figures 10 and 11. Figure 1 is a vertical sectional view of a sixth embodiment of an electromagnetic pump according to this invention; Figure 11 is a sectional view along line B-B of Figure 10; and in the figures, elements that are the same as those shown in Figures 1 and 3 bear the same reference numbers.

The electromagnetic pump in the present embodiment can simultaneously supply oil to three targets with one pump unit. This pump 1 has three sets of sub-assemblies each consisting of oil lines 10, 17 that open into a pump chamber 25 opened and closed by one-way valves 12, 21 and of a plunger 11. The three plungers 11 are driven simultaneously by a single solenoid 4. In this case, like the three plungers 11 the three pump outlet stubs 5B are disposed equi-angularly (120°) along the circumference of the same circle, and point in the same direction (the vertical direction). The top end of each plunger 11 is in contact with the rod 28 through a piston member 45.

The electromagnetic pump of the present embodiment uses a single solenoid 4 to simultaneously drive three plungers 11, thereby making it possible to supply small quantities of oil to three targets simultaneously. Said pump 1 is both compact and inexpensively structured.

Because the electromagnetic pump in the current embodiment places the three plungers 11 equi-angularly along the circumference of the same circle, it is possible to smoothly drive three plungers 11 using a single solenoid, to provide a stable supply of small quantities of oil to three targets.

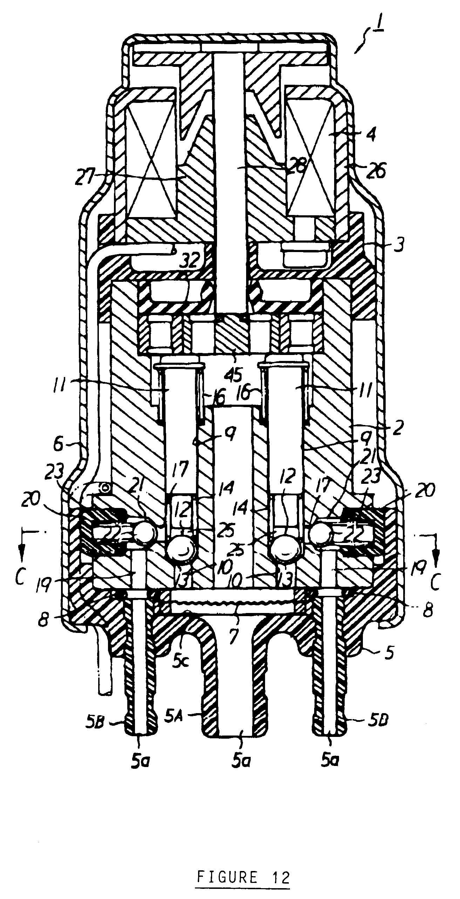

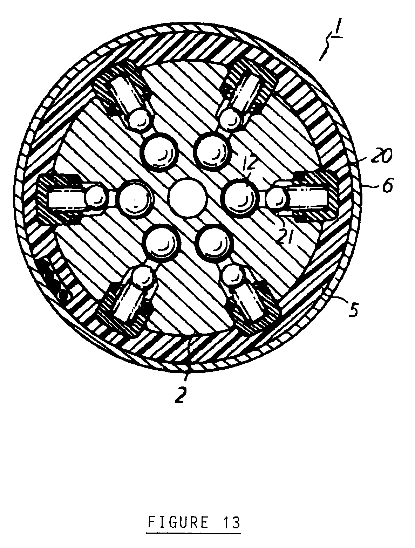

Next, a seventh embodiment of the present invention will be described with reference to Figures 12 and 13. Figure 12 is a vertical sectional view of a seventh embodiment of an electromagnetic pump according to this invention; Figure 13 is a sectional view of the same pump along line C-C of Figure 12; and elements of the figure that are the same as those shown in Figures 1 and 2 bear the same reference numbers.

The electromagnetic pump in the present embodiment can simultaneously supply oil to six targets with one pump unit (for example, to six cylinders). This pump 1 has six sets of sub-assemblies consisting of oil lines 10, 17 that open into a pump chamber 25 each opened and closed by one-way valves 12, 21, and of a plunger 11. The six plungers 11 are driven simultaneously by a single solenoid 4. In this case, like the three plungers 11, the six pump outlet stubs 5B are arrayed equi-angularly (60°) along the circumference of the same circle and point in the same direction (the vertical direction). The top end of each plunger 11 is in contact with the rod 28 by means of a piston member 45.

The electromagnetic pump of the present embodiment uses a single solenoid 4 to simultaneously drive six plungers 11, thereby making it possible to supply small quantities of oil to six targets simultaneously. Said pump 1 is both compact and inexpensively structured.

Because the electromagnetic pump in the current embodiment positions the six plungers 11 equi-angulasrly along the circumference of the same circle, it is possible to smoothly drive six plungers 11 using a single solenoid to provide a stable supply of small quantities of oil to six targets.

Another implementation embodiment of the present invention will be described below based upon the attached figures.

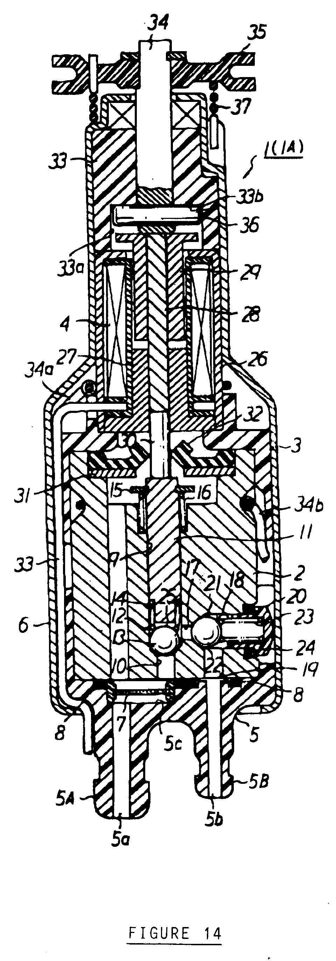

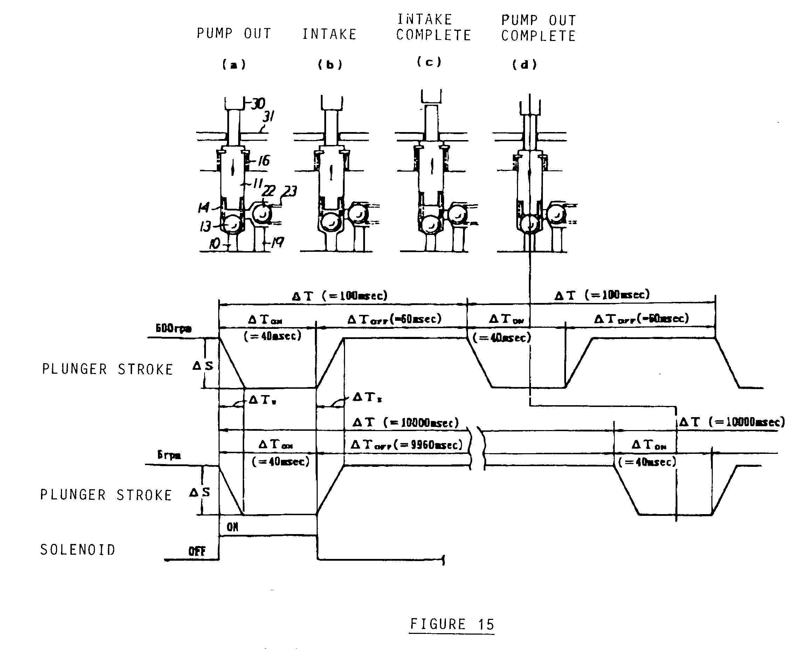

Figure 14 is a vertical sectional view of an electromagnetic pump according to this invention; Figure 15 is a timing chart that will be used to explain the operation of this electromagnetic pump; and Figure 3 is a block diagram showing the structure of the control system for a two-cycle engine including this electromagnetic pump.

At this point, the structure of the foregoing electromagnetic pump 1 (1A) will be described in detail based upon Figure 14. The other electromagnetic pump 1 (1B) has the same configuration so that further explanation of it will be omitted.

As is shown in Figure 14 the electromagnetic pump 1 in the present embodiment positions the solenoid 4 by means of an insulating member 34 at the top of an aluminum pump body 2, and a cap 5 is affixed to the lower half of the body 2; the assembly is fully covered by a sheet metal case 6 to form a tightly closed structure.

Integral to and projecting downward from the foregoing cap 5 are an intake stub 5a and outlet stub 5B. There is a groove 5c formed on the contact surfaces between said cap 5 and the body 2 and a filter 7 is fitted into said groove. Passing through the intake stub 5A and outlet stub 5B are respectively an oil intake passage 5a and a pump outlet passage 5b. As shown in Figure 3, the intake line *a* and the pump outlet line *b* are connected respectively to the oil intake passage 5a and the pump outlet passage 5b. In Figure 14, 8 is a seal ring.

Formed in the middle of the foregoing body 2 are a large diameter hole 9 and a small diameter oil intake passage 20. The oil intake passage 10 opens into the foregoing groove area 5c that is formed in the cap; the plunger 11 is inserted into the hole 9 and is freely slidable up and down. There is a one-way valve 12 on the intake side, composed of a ball 13 and spring 14, that opens and closes the oil intake passage 10. With regard to the one-way valve 12 on the intake side, the spring 14 exerts a force against the ball 13 in a direction that causes it to close the oil intake passage 10 and that presses the plunger 11 upward. The plunger 11 is also pushed upward by means of a spring 16 that lies compressed between the spring receiver 15 fitted on the top outer circumference of the plunger 11 and the body 2. The diameter of the ball 13 is designed to be slightly smaller or to be approximately equivalent to the diameter of the plunger 11.

Further, the small diameter pump outlet passage 17 and the large diameter round hole 18 in the body 2 are formed (horizontally) to intersect at right angles the foregoing round hole 9 and the oil intake passage 10, with the pump outlet passage 17 being connected to the round hole 9. In addition, a pump outlet passage 19 is formed in the vertical direction in the body 2 (parallel to the oil intake passage 10). One end of said pump outlet passage 19 opens into the round hole 18, while the other end connects to the foregoing pump outlet passage 5b.

One end of the foregoing round hole 18 is closed by the plastic cap 20, and the output side one-way valve 21 composed of a ball 22 and a spring 23 is housed inside said round hole 18. The spring 23 exerts force on the ball 22 of the outlet-side one-way valve 21 to push it into the closed direction. In Figure 14, 24 represents a seal ring.

Then, in the current embodiment, the one-way valve 12 on the intake side and the plunger 11 are positioned to be coaxial with the direction of movement of said plunger 11 (in the vertical direction of Figure 14), and the zone that is bounded by the balls 13, 22 of the round hole 9 and the pump outlet passage 17 and the plunger 11 constitutes the pump chamber 25. The balls 13, 22 of both one-way valves are in surface contact or linear contact with the body 2; by using surface contact, any dimensional deviations can be absorbed, and by using linear contact, it is possible to obtain a very tight seal of the one-way valves 12, 21.

The foregoing solenoid 4 is enclosed inside the case 26, and a metal guide member 27 is fitted around its lower inside circumference. A rod 28, free to slide up and down, is inserted through the center of said guide member 27. A stop 29 is attached to the top outside circumference of this rod 28, while the bottom end of this rod 28 is in contact with the plunger 11 through a piezoelectric element 30. Fitted into a groove formed in the top end surface of the foregoing body 2 are a ring-shaped stop 31 and a rubber oil seal 32; the inside circumference of the oil seal 32 is in resilient contact with the outside circumference of the foregoing piezoelectric element 30.

A plastic cam member 33 is housed inside the foregoing cover 6 at the top, and and a long, vertical rotating shaft 34 is rotatably inserted through the center of said cam member 33. A pulley 35 is attached to the top end of this rotating shaft 34, which projects outside the cover 6. There is a pin 36 inserted through and retained in the lower end of this rotating shaft 34, said pin 36 lies inside a concave area 33a formed on the bottom of the foregoing cam member 33. The foregoing pin 36 held in this bottom end engages a rising and falling cam surface 33b that is formed on the cam member 33.

Then, the stop 29 that is attached to the top of the foregoing rod is pushed upward by the foregoing spring 14, and their top end surfaces come into contact with the bottom end surface of the foregoing rotating shaft 34.

Four lead wires 33, 34 (34a, 34b) have been introduced inside the cover 6 through the bottom. The lead wire 33 is connected to the solenoid 4, and the lead wires 34a, 34b are connected to the rod 28 and the piezoelectric element 30, respectively.

Next, the operation of this electromagnetic pump 1 will be explained with reference to Figure 15.

When no current is being applied to the solenoid (when it is OFF), the plunger 11 is pushed upward by the force of springs 14, 16. At this time, the piezoelectric element 30 is separated from the rod 28 and a gap is formed between them. Further, inside the pump chamber 25, the plunger 11 is separated from the ball 13 by a distance ΔS.

Next, when current is passed through the lead wire 33 to turn the solenoid 4 ON, the electromagnetic force generated by said solenoid 4 causes the rod 28 to descend and apply pressure to the piezoelectric element 30. The piezostatic electricity that is generated by the piezoelectric element is detected by the ECU 60 (see Figure 3) through lead wires 34a, 34b to ascertain the operation of the solenoid 4.

Then, as described above, when the rod 28 presses upon the piezoelectric element 30 as shown in Figure 15(a), the plunger 11 overcomes the force of the springs 14, 16 and descends, thereby compressing the oil inside the oil chamber 25, the resulting pressure overcoming the force of the spring 23 upon the ball 22 to open the one-way valve 21 on the pump outlet side, and the oil inside the pump chamber 25 is pushed out through the pump outlet passage 19, through the pump outlet line *b* shown in Figure 3, and into the air intake passage 58 of the two-cycle engine 50 where it becomes intermixed with the air/fuel mixture.

Then, when the plunger 11 descends inside the pump chamber 25 by ΔS, it comes to rest against the ball 13 as is shown in Figure 15(d), whereupon the oil pumping is completed with the pumping of an amount of oil equal to ΔV( = the area A of the bottom end surface of the plunger times the stroke length ΔS) from the pump chamber 25 to the pump outlet passage 19. The time required for the plunger 11 to descend through a stroke of ΔS to contact the ball 13 is ΔT_{D}, as shown in Figure 15, and the solenoid 4 is left ON even after the plunger 11 has come to rest against the ball 13, for a time ΔT_{ON} that is longer than ΔT_{D} (a time interval that is sufficient to completely expel any air contained in the oil in the pump chamber 25).

In the present embodiment, the number of oil pumping cycles N per unit of time (1 min) of the electromagnetic pump 1 is set to be 6/2000 - 600/10000 of the RPM of the two-cycle engine 50. Figure 15 shows a plunger stroke timing chart for the number of oil pumping cycle of 600 rpm and 6 rpm. In the present embodiment, the ON time ΔT_{ON} for the solenoid 4 is not always constant (40 ms) with respect to the engine RPM. The solenoid ON time ΔT_{ON} should be adequate for completely expelling any air included with the oil in the pump chamber, ΔT_{ON}=10 ms or more is preferred.

Then the current to the solenoid 4 is cut to turn it OFF and the resulting lapse of the electromagnetic force causes the rod 28 to ascend to the position shown in Figure 15(b) and the plunger 11 to rise from the force of the springs 14, 16. This procedure generates a negative pressure in the pump chamber 25 and this negative pressure overcomes the force by spring 14 on the ball 13 and causes the one-way valve 12 on the intake side to open. As shown in Figure 3, oil inside the oil tank 72 flows through the oil supply line *a* (see Figure 3) through the oil intake passage 5a, through the filter 7, and through the oil intake passage 10, into the pump chamber 25. In the present embodiment, since any air contained in the oil in the pump chamber 25 is completely expelled before the oil flows into the pump chamber 25, a high negative pressure can be achieved in the pump chamber 25 to reliably prevent air locks and to improve the operational stability of said electromagnetic pump 1.

Thus, as shown in Figure 15(c) when the plunger 11 rises by the amount of ΔS in the pump chamber 25 and then comes to rest against the stop 31, at that point, the oil intake is completed to an intake of oil ΔV (= the area A of the bottom end surface of the plunger 11 times the stroke length ΔS) into the pump chamber 25. At this point, the time for the plunger 11 to rise in the stroke ΔS to come to rest against the stop 31 is ΔT_{S}.

Thus, with regard to the electromagnetic pump 1 in the present embodiment, the cycle time ΔT from the beginning of oil pumping to the completion of intake can be determined for said electromagnetic pump 1 based upon the operating state of the two-cycle engine 50 (eg. the number of oil pumping cycles N per unit of time; in the present embodiment this is set to be equivalent to the engine RPM); then the off-time ΔT_{OFF} required for the solenoid 4 is controlled on the basis of the amount of oil pumped (engine RPM).${\text{ΔT}}_{\text{off}} {\text{= 60 × 1000/N - ΔT}}_{\text{ON}}$

Specifically, the higher the engine RPM, the greater the oil pumping requirement for the electromagnetic pump 1, and the lower the cycle time ΔT setting. In the present embodiment, as is shown in Figure 15 the settings for the cycle time ΔT for 600 rpm and 6 rpm engine speeds are 100 msec (1/10 sec), and 10,000 msec (10 sec), respectively. Accordingly, if the OFF time ΔT_{OFF} for the solenoid 4 is computed using Equation 1, the respective ΔT_{OFF} times are 60 msec and 9960 msec.

Then, the repetition of the above described operation causes the reciprocating movement of the plunger 11 up and down to intermittently pump an amount ΔV by the electromagnetic pump 1.

In the present embodiment, the dead space V' in the pump chamber 125 (= the volume V of the pump chamber 25 minus the volume ΔV of oil pumped) is set to be 0.1 cc, and the oil output volume ΔV is set to be 0.05 cc.

Thus, as described above, the dead space V' in the pump chamber has been minimized (0.1 cc), and because the oil compression ratio, defined by the following Equation 2, has been increased to 0.33 as a result, high negative and positive pressures can be generated in the pump chamber.$\text{Compression ratio = ΔV/V = ΔV/(V' + ΔV)}$ resulting in a valve-opening pressure of 0.3 kg/cm² for the one-way valves 12, 21. This design preventa air locks and offers more stable operation of the one-way valves. Also, since the oil output ΔV per pump cycle is small (0.05 cc/cycle), small quantities of oil can be reliably supplied.

To achieve the foregoing effects, it is necessary to hold the dead space V' of the pump chamber to 0.1 cc or less, and the oil pump output ΔV to 0.001 to 0.05 cc/cycle.

Also, the stroke ΔS of the plunger 11 of the electromagnetic pump 1 of the present embodiment can be varied according to the operating state of the two-cycle engine 50.

To wit, by manipulating the wire (not shown) wound around the pulley 35 according to the operating state of the two-cycle engine 50, it is possible to rotate the rotating shaft 34 to the desired angle, thereby causing the pin 36 held by said rotating shaft 34 to engage the cam surface 33b of the cam member 33 and to move the integral rotating shaft up or down. Since this feature causes the rod 28 to move up and down, the stroke ΔS of the plunger 11 can be increased or decreased.

Thus, because the electromagnetic pump of the present embodiment makes it possible to vary the stroke ΔS of the plunger 11 and to vary the OFF time ΔT_{OFF} of the solenoid 4, compared with conventional electromagnetic pumps, it is possible to expand the range of control over the amount of oil that is pumped by the variable amount of ΔS, thereby expanding the dynamic range of said electromagnetic pump using a simple design.

While the foregoing explanation pertained only to the operation of one of the electromagnetic pumps 1A, the other electromagnetic pump 1B operates in the same way. As is shown in Figure 3, it supplies the required amount of oil through the pump outlet line *b* to lubricate the sliding surfaces of the cylinder 51a and the piston 54.

As is clear from the foregoing explanation, according to the invention, because at least one of the one-way valves and plunger is disposed coaxially with respect to the direction of movement of said plunger, it is possible to keep small the volume of the pump chamber and to increase the compression ratio on the fluid in the pump chamber, thus preventing air locks and improving the operational stability of the one-way valves. In addition, because the single-cycle pump output has been minimized, it is possible to assure the supply of small quantities of fluids.

According to another embodiment of the invention, because the plunger exerts a strong pressure to close one of the one-way valves when no current is being applied to the solenoid, fluid cannot flow through said one-way valve and enter the pump chamber at that time, thereby preventing more fluid than the controlled amount from being pumped out.

According to a further embodiment of the invention, because the operation of the solenoid can be electrically ascertained by an ON-OFF signal or by the amount of piezostatic electricity, said electromagnetic pump is highly fail-safe.

As was explained above, according to another embodiment of the invention, since the dead space V' in the pump chamber (= the volume V of the pump chamber minus the amount of fluid ΔV pumped out) has been minimized (0.1 cc or less), it is possible to increase the compression ratio of the fluid in the pump chamber, thereby preventing air locks and improving the operational stability of the one-way valves. Further, since the single cycle pump output ΔV has been minimized (0.001 to 0.05 cc/cycle), it is possible to reliably supply small quantities of fluids.

Further, according to a further embodiment of the invention, since the solenoid ON time has been set to 10 ms or greater, any air in the pump chamber is completely expelled before the intake of fluid into the pump chamber, thereby allowing the generation of a high negative pressure in the pump chambe to prevent air locks and to improve the operational stability of the electromagnetic pump.

Further still, according to another embodiment of the invention, since the stroke of the plunger and the solenoid OFF time of the electromagnetic pump are variable, compared to conventional electromagnetic pumps, the range of control of the fluid output is expanded by the amount through which the stroke can be varied, and the dynamic range is expanded by means of a simple design.

According to a still further embodiment of the invention, it is possible to simultaneously drive a plurality of plungers with a single solenoid, thereby making it possible to simultaneously supply small quantities of fluid to a plurality of targets, and said electromagnetic pump is both compact and inexpensively structured.

According to another embodiment of the invention, because the plurality of plungers are located along the circumference of the same circle at equal angles, it is possible to smoothly drive the plurality of plungers with a single solenoid.

## Claims

1. Electromagnetic pump (1) comprising at least two fluid passages (10, 17) both opening into a pump chamber (25) and being openable and closable, respectively, by respective valves (12, 22), a plunger (11) reciprocately movable inside said pump chamber (25) and a solenoid (4) for driving said plunger (11), **characterized in that** at least one of said valves (12, 22) being coaxially positioned with said plunger (11) with respect to the direction of reciprocating movement of said plunger (11).

2. Electromagnetic pump according to claim 1, **characterized in that** said pump chamber (25) having a dead space of 0.1 cm³ or less and having an output of pumped fluid within a range from 0.001 cm³/pump cycle to 0.05 cm³/pump cycle.

3. Electromagnetic pump according to claim 1 or 2, **characterized in that** said plunger (11) is in contact with and closes said coaxially disposed valve (12, 22) when said solenoid is in its OFF condition or not excited condition, respectively.

4. Electromagnetic pump according to at least one of the preceding claims 1 to 3, **characterized in that** the operation of said solenoid is detectable.

5. Electromagnetic pump according to claim 4, **characterized in that** the operation of said solenoid is detectable by means of an electrical ON-OFF-signal or by piecostatic electricity producable by a piecoelectric element and generatable by the separation of said plunger (11) from an electrically conductive member.

6. Electromagnetic pump according to at least one of the preceding claims 1 to 5, **characterized in that** said valves are one-way valves (12, 22).

7. Electromagnetic pump according to claim 6, **characterized in that** each of said valves comprising a spring biased ball.

8. Electromagnetic pump according to claim 7, **characterized in that** said plunger (11) and the spring biased ball of said coaxially aligned valve (12, 22) being positioned adjacently inside said pump chamber (25).

9. Electromagnetic pump according to at least one of the preceding claims 1 to 8, **characterized in that** the ON-time or excitation time, respectively, of said solenoid (4) is at least 10 milliseconds (ms).

10. Electromagnetic pump according to at least one of the preceding claims 1 to 9, **characterized in that** the stroke of said plunger (11) being variable.

11. Electromagnetic pump according to at least one of the preceding claims 1 to 10, **characterized in that** the OFF-time or de-excitation time, respectively, of said solenoid (4) is variable.

12. Electromagnetic pump **characterized by** comprising a plurality of electromagnetic pumps (1) according to at least one of the preceding claims 1 to 11 as sub-assemblies.

13. Electromagnetic pump according to claim 12, **characterized in that** said sub-assemblies being positioned equi-angularly along the circumference of a single circle and pointing to the same direction.
